# EUROPEAN PATENT SPECIFICATION

(11) **EP 4 322 243 B1**
(45) Date of publication and mention of the grant of the patent: **19.08.2026**
(21) Application number: 22794914.6
(22) Date of filing: 26.04.2022
(51) Int. Cl.: H01M 4/13, H01M 10/052, H01M 10/0587, H01M 50/531

(54) **ELECTROCHEMICAL APPARATUS, ELECTRICAL APPARATUS AND CHARGING APPARATUS**
ELEKTROCHEMISCHE VORRICHTUNG, ELEKTRISCHE VORRICHTUNG UND LADEVORRICHTUNG
APPAREIL ÉLECTROCHIMIQUE, APPAREIL ÉLECTRIQUE ET APPAREIL DE CHARGE

(30) Priority: 28.04.2021 CN 202110470309
(43) Date of publication of application: 14.02.2024
(73) Proprietor: Ningde Amperex Technology Limited, Ningde City, Fujian Province 352100 (CN)
(72) Inventor: TAO, Wei, Fujian 352100 (CN)
(74) Representative: Icosa
(86) International application number: PCT/CN2022/089386
(87) International publication number: WO 2022/228444

(56) References cited:
- WO-A1-2011/086562
- CN-A- 101 286 577
- CN-A- 103 606 715
- CN-A- 103 606 715
- CN-A- 106 257 710
- CN-A- 107 302 109
- CN-A- 108 899 475
- CN-U- 206 059 512
- JP-A- 2013 214 409
- KR-A- 20150 047 874
- US-A1- 2017 092 925
- US-A1- 2019 097 259

## Description

### TECHNICAL FIELD

This application relates to the technical field of batteries, and in particular, to an electrochemical device, an electrical device containing the electrochemical device, and a charging device connected to the electrochemical device and configured to charge the electrochemical device.

### BACKGROUND

US 2017/092925 A1 discloses a jelly-roll battery cell that includes notches to accommodate connections to electrode tabs that extend from the battery cell.

CN 103 606 715 A discloses an equal-amplitude pulse current charging method combining positive and negative pulses, to maintain continuous high current for rapid charging during the charging process.

CN 107 302 109 A discloses a wound battery cell that can reduce the amount of separator and adhesive paper used, reduce the thickness of the wound battery cell, and increase the energy density of the wound battery cell.

WO 2011/086562 A1 discloses a method of pulse charging developed based on the pseudo two-dimensional (P2D) model and a thermal electrochemistry coupled model according to which the diffusion coefficient of Li ions in the solid phase and electrolyte, the reaction rate constants of the electrochemical reactions, the open circuit potentials and the thermal conductivity of the binary electrolyte depend on the temperature.

In the technical field of fast charge for a lithium battery currently, a multi-tab winding structure or Middle Middle Tab (MMT) structure is generally employed to reduce polarization and improve the charging capabilities and charging speed. For a multi-tab winding structure, an excessive amount of nickel tabs needs to be welded to a positive electrode plate. A corresponding part needs to be subjected to polycaprolactone (PCL) adhesive bonding or laser cleaning, thereby reducing an effective area of an active material, and in turn, reducing the overall capacity and energy density of the active material. For an MMT structure, an edge current density at the position of a negative tab increases. In addition, when the tab is welded at a middle position of a negative electrode, a slot needs to be made by laser cleaning, thereby inducing a problem of edge thinning. This makes the edge of the negative tab very prone to lithium plating, and leads to cycle capacity fading and safety hazards.

In view of the problem of edge thinning, a method is proposed in the prior art which uses a foam baffle and adhesive tape to improve the thinning precision, but this method imposes very high requirements on equipment and involves complicated operations. In addition, another method in the prior art is to arrange L-shaped chamfered baffle and deflector to perform re-thinning. However, this method is costly and reduces production capacity.

### SUMMARY

In view of this, it is necessary to put forward an electrochemical device to solve the problem of lithium plating caused by edge thinning of a tab on the basis of keeping the capacity and energy density from losing.

In addition, it is necessary to put forward an electrical device containing the electrochemical device, and a charging device connected to the electrochemical device and configured to charge the electrochemical device.

A technical solution of this application is: An electrochemical device, including an electrode assembly and a charging circuit configured to receive a charge current and charge the electrochemical device. The electrode assembly is formed by winding a first electrode plate, a separator, and a second electrode plate for N turns. The separator is disposed between the first electrode plate and the second electrode plate. The first electrode plate includes a first current collector, a first active material layer disposed on a surface of the first current collector, and X first tabs, where X is an integer greater than 1, and the X first tabs and the first current collector are integrally formed. The first tabs and the first current collector are integrally formed. The second electrode plate includes a second current collector, a second active material layer disposed on a surface of the second current collector, and at least one second tab electrically connected to the second current collector. The number of the second tabs is Y, and Y is less than X; the first electrode plate is a negative electrode plate; the second electrode plate is a positive electrode plate; the second active material layer contains a first groove; and the second tab is disposed in the first groove.

By integrally forming the first tab on the first current collector, the technical solution hereof avoids the loss of active materials on the first electrode plate caused by factors such as slot cleaning or PCL adhesive bonding, and avoids a series of problems caused by uneven thinning, thereby keeping the capacity and energy density of electrochemical device from losing. In addition, the number of second tabs in this application is less than the number of the first tabs. Compared with a multi-tab winding structure of a positive electrode, the structure disclosed herein reduces the region that needs to be thinned, thereby keeping the capacity and energy density from losing.

In an embodiment, X satisfies 1 ≤ X ≤ 4 × N. In an embodiment, X satisfies (1/2) × N ≤ X ≤ 4 × N. In an embodiment, Y satisfies 1 ≤ Y ≤ 2 × N.

This structure can effectively reduce ohmic polarization of the negative electrode. Compared with the conventional multi-tab winding structure, the structure disclosed herein improves the charging capabilities effectively, and can upgrade the charging capabilities from the original 3 C charging to 4C or even 5 C charging without lithium plating. In addition, under the conditions of the same number of active material layers and the same coating weight of the active material, the electrochemical device of the foregoing structure can increase the capacity by approximately 5% to 10%. Compared with the Middle Middle Tab structure, the structure disclosed herein eliminates the lithium plating phenomenon at the edge of the negative tab, and increases the charge capacity by 10% to 20%.

The present invention is defined in claim 1 while preferred embodiments are set forth in the dependent claims. In an embodiment, the charge current is an impulse current.

In pulse charging, charging is coupled with discharging, and a charging process involves an endothermic process, and the entire discharging process is an exothermic reaction. In this application, because the second electrode plate is more polarized than the first electrode plate, the total current in the charging process is consistent between the two electrode plates. The ohmic polarization of the second electrode plate is high. According to the Joule's heat law, the generated heat is proportional to the impedance. Therefore, the second electrode plate increases temperature faster than the first electrode plate, so that the second electrode plate does not precipitate lithium. When the temperature of the second electrode plate is higher than that of the first electrode plate, the heat is transferred evenly to the first electrode plate, and the temperature of the first electrode plate can be increased evenly. Therefore, coupled with a pulse charging manner, the structure disclosed herein significantly improves charging capabilities of the electrochemical device under low-temperature conditions.

In an embodiment, a forward voltage duty cycle of the impulse current is 60% to 90%, a reverse voltage duty cycle of the impulse current is 10% to 40%, and a frequency range of the impulse current is 100 Hz to 1000 Hz. The forward voltage duty cycle means a time ratio of the forward voltage in one cycle, and the reverse voltage duty cycle means a time ratio of the reverse voltage in one cycle.

In an embodiment, a forward voltage duty cycle of the impulse current is 80% to 90%, a reverse voltage duty cycle of the impulse current is 10% to 20%, and a frequency range of the impulse current is 500 Hz to 1000 Hz.

By adjusting the pulse charging parameters such as the frequency and the duty cycle, the low-temperature charging capabilities can be improved to different degrees. Specifically, when the charge frequency of full charge is higher than 100 Hz, the effect is higher. When the reverse voltage duty cycle is not less than 10%, the effect is higher.

In an embodiment, the charging current is a staged charge current. The staged charge current includes a first-stage constant current and a second-stage constant-voltage current. In a first stage, the charging circuit receives the constant current, and charges the electrochemical device until a preset voltage. A capacity of the electrochemical device at this time is a first capacity. In a second stage, the charging circuit receives the constant-voltage current, and charges the electrochemical device until a preset current. A capacity of the electrochemical device at this time is a second capacity.

In an embodiment, a working temperature of the electrochemical device is 20 °C to 30 °C, a current rate of the constant current is 2.5 C to 3.5 C, and the first capacity is 72% to 88.7% of the second capacity. In an embodiment, a working temperature of the electrochemical device is 25 °C, a current rate of the constant current is 3 C, and the first capacity is 72% to 88.7% of the second capacity.

In an embodiment, a working temperature of the electrochemical device is 20 °C to 30 °C, a current rate of the constant current is 1 C to 2 C, and the first capacity is 40% to 69% of the second capacity. In an embodiment, a working temperature of the electrochemical device is 25 °C, a current rate of the constant current is 1.5 C, and the first capacity is 40% to 69% of the second capacity.

In an embodiment, the at least one first tab is disposed at equal intervals in a length direction of the first electrode plate.

In an embodiment, the at least one second tab is disposed at equal intervals in a length direction of the second electrode plate.

In an embodiment, the number of the second tabs is 1, and the second tab is disposed at a middle position in the length direction of the second electrode plate.

This application further provides an electrical device. The electrical device includes the electrochemical device described above, and the electrochemical device supplies power to the electrical device.

This application further provides a charging device. The charging device is connected to the electrochemical device described above, and is configured to charge the electrochemical device.

In the electrochemical device, electrical device, and charging device according to this application, by integrally forming the first tab on the first current collector, the electrochemical device avoids the loss of active materials on the first electrode plate caused by factors such as slot cleaning or PCL adhesive bonding, and avoids a series of problems caused by uneven thinning, thereby keeping the capacity and energy density of electrochemical device from losing. In addition, the second tab is a single tab located in the middle or includes just a few tabs in the middle, so as to reduce the thinned region. Compared with a multi-tab winding structure, the electrochemical device hereof can keep the capacity and energy density from losing. Moreover, coupled with a pulse charging manner, the structure disclosed herein significantly improves the charging capabilities of the electrochemical device under low-temperature conditions.

### BRIEF DESCRIPTION OF DRAWINGS

The following describes this application in more detail with reference to drawings and specific embodiments.
FIG. 1 is a schematic structural diagram of an electrode assembly in an electrochemical device according to an embodiment of this application;
FIG. 2 is a schematic structural diagram of a first electrode plate according to an embodiment of this application;
FIG. 3 is a schematic structural diagram of a second electrode plate according to an embodiment of this application;
FIG. 4 is a schematic outside view of an electrochemical device according to Embodiment 1 of this application;
FIG. 5 is a schematic outside view of an electrochemical device in a charging process according to Comparative Embodiment 1; and
FIG. 6 is a schematic outside view of an electrochemical device in a charging process according to Comparative Embodiment 2.

**Reference numerals of main components:**

| | |
|---|---|
| Electrode assembly | 100 |
| First electrode plate | 10 |
| Separator | 30 |
| Second electrode plate | 50 |
| First current collector | 101 |
| First active material layer | 103 |
| First tab | 105 |
| Second current collector | 501 |
| Second active material layer | 502 |
| Second tab | 503 |
| First groove | 504 |
| First layer | 11 |
| Second layer | 12 |
| Third layer | 13 |
| Fourth layer | 14 |
| Fifth layer | 15 |
| Sixth layer | 16 |
| Seventh layer | 17 |
| First direction | A |
| Second direction | C |

The following further describes the embodiments of this application with reference to the drawings.

### DETAILED DESCRIPTION OF EMBODIMENTS

Unless otherwise defined, all technical and scientific terms used herein have the same meanings as those generally understood by a person skilled in the technical field of this application. The terms used herein are merely intended to describe specific embodiments but not to limit the embodiments of this application.

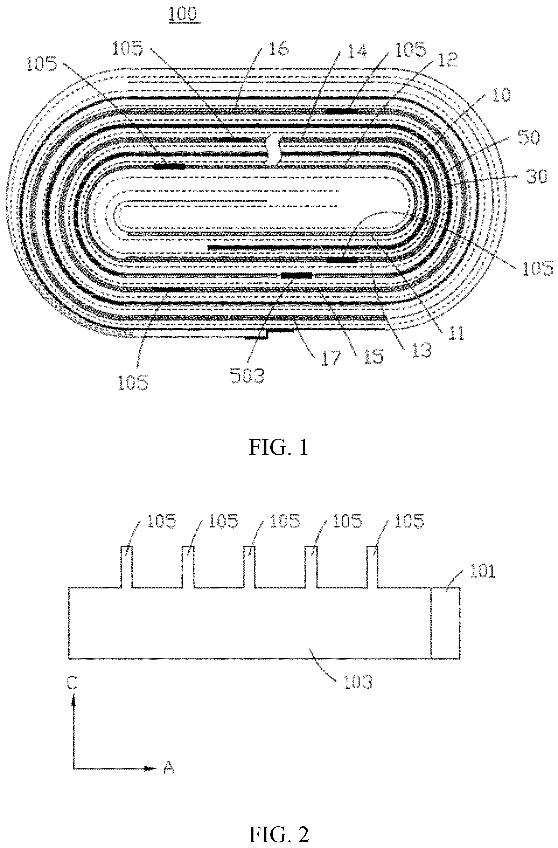

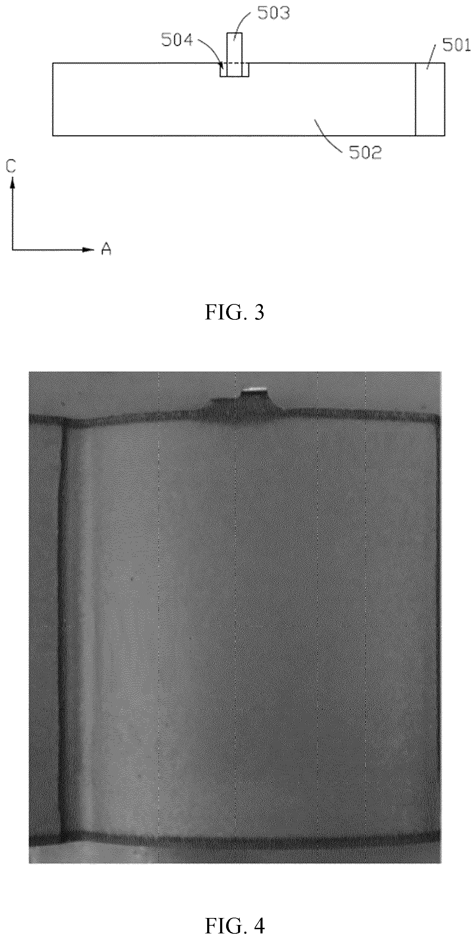

This application provides an electrochemical device, including an electrode assembly 100 and a charging circuit configured to receive a charge current and charge the electrochemical device. As shown in FIG. 1, the electrode assembly 100 is formed by winding the first electrode plate 10, the separator 30, and the second electrode plate 50 for N turns. The separator 30 is disposed between the first electrode plate 10 and the second electrode plate 50. As shown in FIG. 2, the first electrode plate 10 includes a first current collector 101 and a first active material layer 103. A first part of the first current collector 101 is coated with the first active material layer 103. A second part (not coated with the first active material layer 103) of the first current collector 101 includes at least one first tab 105. The number of the first tabs 105 is X. As shown in FIG. 3, the second electrode plate 50 includes a second current collector 501, a second active material layer 502 disposed on a surface of the second current collector 501, and at least one second tab 503 electrically connected to the second current collector 501. The number of the second tabs 503 is Y, and Y is less than X. The second active material layer 502 contains a first groove 504. The second tab 503 is disposed in the first groove 504, and is electrically connected to the second current collector 501, so that the second tab 503 is a built-in tab.

As shown in FIG. 2, the electrode plate (the first electrode plate or the second electrode plate) is in an unfolded state. The length direction of the electrode plate (for example, the length direction of the first electrode plate, or the length direction of the second electrode plate) is a first direction A. The width direction of the electrode plate (for example, the width direction of the first electrode plate, or the width direction of the second electrode plate) is a second direction C. The first direction A is perpendicular to the second direction C.

As shown in FIG. 2, after the first part of the first current collector 101 is coated with the first active material layer 103, on the second part uncoated with the first active material layer 103 on the first electrode plate 10, a blank part is cut out from the first current collector 101 by laser die-cutting, and serves as a first tab 105. The first tab 105 and the first current collector 101 are integrally formed. This method can solve the problem of uneven edge thinning of the tab. Understandably, the method for integrally forming the first tab 105 on the first current collector 101 includes, but is not limited to, laser die cutting. Other methods for integrally forming the first tab 105 on the first current collector 101 are also applicable. FIG. 2 shows a circumstance in which five first tabs 105 are cut out by laser die-cutting. Understandably, more or fewer first tabs 105 may be cut out by laser die-cutting.

In this embodiment, the first electrode plate 10 is a negative electrode plate, the second electrode plate 50 is a positive electrode plate, the first tab 105 is a negative tab, and the second tab 503 is a positive tab. By integrally forming the first tab 105 on the first current collector 101, the technical solution hereof avoids the loss of active materials on the first electrode plate 10 caused by factors such as slot cleaning or PCL adhesive bonding, and avoids a series of problems caused by uneven thinning, thereby keeping the capacity and energy density of the electrochemical device from losing. In addition, the number of second tabs 503 in this application is less than the number of the first tabs 105. Compared with a multi-tab winding structure of a positive electrode, the structure disclosed herein can keep the capacity and energy density from losing.

In some embodiments, X satisfies 1 < X ≤ 4 × N. In some embodiments, X and Y satisfy N < X ≤ 4 × N, and 1 ≤ Y ≤ 2 × N.

This structure can effectively reduce ohmic polarization of the negative electrode. Compared with the conventional multi-tab winding structure, the structure disclosed herein improves the charging capabilities effectively, and can upgrade the charging capabilities from the original 3 C charging to 4C or even 5 C charging without lithium plating. In addition, under the conditions of the same number of active material layers and the same coating weight of the active material, the electrochemical device of the foregoing structure can increase the capacity by approximately 5% to 10%. Compared with the Middle Middle Tab structure, the structure disclosed herein eliminates the lithium plating phenomenon at the edge of the negative tab, and increases the charge capacity by 10% to 20%.

In some embodiments, the charge current is an impulse current. Specifically, a charging circuit is electrically connected between the electrochemical device and a processor (a component in a battery management system BMS). The processor is configured to send a pulse control signal so that the charging circuit is controlled to generate an impulse current. The impulse current is a charge current for the electrochemical device.

In pulse charging, charging is coupled with discharging, and a charging process involves an endothermic process, and the entire discharging process is an exothermic reaction. In this application, because the second electrode plate 50 (positive electrode plate) is more polarized than the first electrode plate 10 (negative electrode plate), the total current in the charging process is consistent between the two electrode plates. The ohmic polarization of the second electrode plate 50 is high. According to the Joule's heat law, the generated heat is proportional to the impedance. Therefore, the second electrode plate 50 increases temperature faster than the first electrode plate 10, so that the second electrode plate 50 does not precipitate lithium. When the temperature of the second electrode plate 50 is higher than that of the first electrode plate 10, the heat is transferred evenly to the first electrode plate 10, and the temperature of the first electrode plate 10 can be increased evenly. Therefore, coupled with a pulse charging manner, the structure disclosed herein significantly improves charging capabilities of the electrochemical device under low-temperature conditions.

Further, a forward voltage duty cycle of the impulse current is 60% to 90%, a reverse voltage duty cycle of the impulse current is 10% to 40%, and a frequency range of the impulse current is 100 Hz to 1000 Hz. Further, a forward voltage duty cycle of the impulse current is 80% to 90%, a reverse voltage duty cycle of the impulse current is 10% to 20%, and a frequency range of the impulse current is 500 Hz to 1000 Hz.

By adjusting the pulse charging parameters such as the frequency and the duty cycle, the low-temperature charging capabilities can be improved to different degrees. Specifically, when the charge frequency of full charge is higher than 100 Hz, the effect is higher. When the reverse voltage duty cycle is not less than 10%, the effect is higher.

**In** some embodiments, the charging current is a staged charge current. The staged charge current includes a first-stage constant current and a second-stage constant-voltage current. **In** a first stage, the charging circuit receives the constant current, and charges the electrochemical device until a preset voltage. A capacity of the electrochemical device at this time is a first capacity. In a second stage, the charging circuit receives the constant-voltage current, and charges the electrochemical device until a preset current. A capacity of the electrochemical device at this time is a second capacity.

Further, a working temperature of the electrochemical device is 20 °C to 30 °C, a current rate of the constant current is 2.5 C to 3.5 C, and the first capacity is 72% to 88.7% of the second capacity. Alternatively, a working temperature of the electrochemical device is 20 °C to 30 °C, a current rate of the constant current is 1 C to 2 C, and the first capacity is 40% to 69% of the second capacity.

Further, the working temperature of the electrochemical device is 25 °C, the current rate of the constant current is 3 C, and the first capacity is 72% to 88.7% of the second capacity. Alternatively, the working temperature of the electrochemical device is 25 °C, the current rate of the constant current is 1.5 C, and the first capacity is 40% to 69% of the second capacity.

In some embodiments, the at least one first tab 105 is disposed at equal intervals in a length direction (that is, the first direction A) of the first electrode plate 10. In this application, the length of the first electrode plate 10 means the length of the first active material layer 103 in the first direction A, that is, the length excluding a blank foil region (a region uncoated with the first active material layer 103 on the first current collector 101). One end of the first electrode plate 10 is a starting end or terminating end of the first active material layer 103. In this application, the plurality of first tabs 105 are arranged at equal intervals as follows: The first tab 105 is approximately in the shape of a rectangle, an intersection of vertical bisectors of two opposite sides of the rectangle is the center of the first tab 105, and distances between the centers of any two adjacent first tabs 105 in the first direction A are equal, or a difference of distances between the centers of any two adjacent first tabs 105 falls within 15%. For example, as shown in FIG. 2, the number of the first tabs 105 is 5. The 5 first tabs 105 approximately equally divide the first electrode plate 10 (from the starting end of the first active material layer 103 to the terminating end of the first active material layer 103) into 6 parts in the first direction A. Along the first direction, the distance between the center of the left first one of the first tabs 105 and the starting end of the first active material layer 103 is equal to the distance between the center of the right first one of the first tabs 105 and the terminating end of the first active material layer 103, and is equal to the distance between the centers of any two adjacent first tabs 105. The first tabs 105 are symmetrically and equidistantly distributed on the first electrode plate 10 (excluding the length of the blank foil region).

In some embodiments, in the electrode assembly, the projections of at least two first tabs 105 along the thickness direction of the electrode assembly coincide. For example, there are 6 first tabs 105 in the electrode assembly. The projections of 3 first tabs 105 along the thickness direction of the electrode assembly coincide at a first position, and the projections of other 3 first tabs 105 along the thickness direction of the electrode assembly coincide at a second position. The first position and the second position are arranged along the direction A. For example, along the direction A, the first position is to the left of the second position.

In some embodiments, the at least one second tab 503 is disposed at equal intervals in the length direction of the second electrode plate 50. In this application, the length of the second electrode plate 50 means the length of the second active material layer 502 in the first direction A, that is, the length excluding a blank foil region (a region uncoated with the second active material layer 502 on the second current collector 501). One end of the second electrode plate 50 is a starting end or terminating end of the second active material layer 502. The disposing at equal intervals means: The second tab 503 is approximately in the shape of a rectangle, an intersection of vertical bisectors of two opposite sides of the rectangle is the center of the second tab 503, and distances between the centers of any two adjacent second tabs 503 in the first direction A are equal, or a difference of distances between the centers of any two adjacent second tabs 503 falls within 15%. FIG. 3 shows a circumstance in which the number of second tabs 503 is 1. The second tab 503 is located approximately at a middle position of the second active material layer 502. To be specific, along the first direction, the distance between the center of the second tab 503 and the starting end of the second active material layer 502 is approximately equal to the distance between the center of the second tab 503 and the terminating end of the second active material layer 502. Understandably, the number of second tabs 503 may be plural. For example, the number of second tabs 503 is 2, 3, or the like, but not greater than the number X of the first tabs 105, and not greater than twice the number N of winding turns. When the number of second tabs 503 is 2, the 2 second tabs 503 approximately equally divide the second electrode plate 50 (from the starting end of the second active material layer 502 to the terminating end of the second active material layer 502) into 3 parts in the first direction A.

The following further describes this application with reference to specific embodiments and comparative embodiments.

### Embodiment 1

Negative active materials include materials that enable reversible intercalation and deintercalation of lithium ions, including but not limited to carbon materials. The carbon materials include, but are not limited to, crystalline carbon, non-crystalline carbon, or a mixture thereof. The method for preparing the first electrode plate is: Mixing the negative active material, graphite, conductive agent SP, and polyacrylic acid binder at a mass ratio of 5: 90: 2: 3 in an aqueous solution to prepare a negative slurry; coating a 10-µm-thick first current collector (copper foil) with the slurry to form an active material layer at an areal density of 185 g/m²; drying and calendering the foil at a compacted density of 1.6 g/cm³, and slitting the foil to obtain a first electrode plate. In this embodiment, the first electrode plate is a negative electrode plate. Cutting out 5 first tabs (negative tabs) from a blank copper foil for a first electrode plate by laser die-cutting. The 5 first tabs are disposed at equal intervals. To be specific, the following three distances are equal: the distance between the center of the left first one of the first tabs and the starting end of the first active material layer, the distance between the center of the right first one of the first tabs and the terminating end of the first active material layer, and the distance between centers of any two adjacent first tabs. The 5 first tabs are symmetrically and equidistantly distributed on the first electrode plate.

An aluminum foil is made into a second electrode plate by using a conventional technology in the art, and 1 second tab is disposed at a middle position in the length direction of the second electrode plate by laser cleaning or PCL adhesive bonding. In this embodiment, the second electrode plate is a positive electrode plate, and the second tab is a positive tab.

Referring to FIG. 1, the prepared first electrode plate, separator (polypropylene PP or polyethylene PE separator, coated with a ceramic layer and an adhesive layer), and the second electrode plate are wound counterclockwise for 3.5 turns to form an electrode assembly. As can be seen from FIG. 1, after 1 first electrode plate, 1 separator, and 1 second electrode plate are stacked and wound for 3.5 turns, the number of layers of the first electrode plate in each turn is two, that is, an upper layer and a lower layer. Therefore, the total number of layers in the first electrode plate of the entire electrode assembly is: 1 × 3.5 (turns) × 2, amounting to 7. As shown in FIG. 1, the 7 layers are: a first layer 11, a second layer 12, a third layer 13, a fourth layer 14, a fifth layer 15, a sixth layer 16, and a seventh layer 17. Similarly, the number of layers of the second electrode plate is also 7.

The electrode assembly is packaged in an aluminum plastic film, filled with an electrolytic solution, stored, chemically formed, graded, and so on, to make an electrochemical device. The following performance test is performed on the prepared electrochemical device:
3C CC Ratio@25 °C: In a process of charging the electrochemical device at a constant current (CC) of 3 C and then at a constant voltage (CV) in a 25 °C environment, the percentage of constant-current charging is denoted as 3C CC Ratio@25 °C. The lower the polarization of the electrochemical device, the higher the corresponding 3C CC Ratio@25 °C will be.

1.5C CC Ratio@0 °C: In a process of charging the electrochemical device at a constant current (CC) of 1.5 C and then at a constant voltage (CV) in a 0 °C environment, the percentage of constant-current charging is denoted as 1.5C CC Ratio@0 °C. The lower the polarization of the electrochemical device, the higher the corresponding 1.5C CC Ratio@0 °C will be.

1000^{th}-cycle capacity retention rate: In a 25 °C environment, the electrochemical device is charged at a constant current of 3 C until the voltage reaches the rated voltage, and then charged at a constant voltage until the current reaches 0.025 C. At this time, the electrochemical device is considered as fully charged. Subsequently, the electrochemical device is discharged at 1.0 C until the voltage reaches a lower limit of 3 V. The capacity measured at this time is a cycle capacity. The foregoing steps are repeated for 1000 cycles, and the capacity retention rate at the end of the 1000^{th} cycle is recorded.

In this embodiment, the 3C CC Ratio@25 °C is 76%, the 1.5C CC Ratio@ 0°C is 40%, and the 1000^{th}-cycle capacity retention rate is 80.2%. In this embodiment, as shown in FIG. 4, no lithium is precipitated at the edge of the tab during the charging of the electrochemical device.

### Embodiment 2

Differences from Embodiment 1 are: The number of first tabs is 7, which is the same as the number of layers of the first electrode plate, and is 2×N (3.5 turns). Other settings are the same as those in Embodiment 1. For example, the first tabs are disposed at equal intervals, the number of second tabs is 1, and the second tab is disposed at a middle position in the length direction of the second electrode plate, details of which are omitted here.

In this embodiment, the 3C CC Ratio@25 °C is 80%, the 1.5C CC Ratio@ 0°C is 45%, and the 1000^{th}-cycle capacity retention rate is 81.6%.

### Embodiment 3

Differences from Embodiment 1 are: The number of first tabs is 14, which is 2 multiplied by the number of layers of the first electrode plate, and is 4×N (3.5 turns). Other settings are the same as those in Embodiment 1, and are omitted here.

In this embodiment, the 3C CC Ratio@25 °C is 81%, the 1.5C CC Ratio@ 0°C is 50%, and the 1000^{th}-cycle capacity retention rate is 83%.

### Embodiment 4

Differences from Embodiment 1 are: The number of second tabs is 2, and the 2 second tabs are disposed at equal intervals in the length direction of the second electrode plate, that is, located at 1/3 and 2/3 positions of the length, respectively. Other settings are the same as those in Embodiment 1, and are omitted here.

In this embodiment, the 3C CC Ratio@25 °C is 78%, the 1.5C CC Ratio@ 0°C is 42%, and the 1000^{th}-cycle capacity retention rate is 80.1%.

### Embodiment 5

Differences from Embodiment 1 are: The number of second tabs is 3, and the 3 second tabs are disposed at equal intervals in the length direction of the second electrode plate, that is, located at 1/4, 2/4, and 3/4 positions of the length, respectively. Other settings are the same as those in Embodiment 1, and are omitted here.

In this embodiment, the 3C CC Ratio@25 °C is 79%, the 1.5C CC Ratio@ 0°C is 47%, and the 1000^{th}-cycle capacity retention rate is 82.1%.

### Embodiment 6

Differences from Embodiment 1 are: The number of second tabs is 4, and the 4 second tabs are disposed at equal intervals in the length direction of the second electrode plate, that is, located at 1/5, 2/5, 3/5, and 4/5 positions of the length, respectively. Other settings are the same as those in Embodiment 1, and are omitted here.

In this embodiment, the 3C CC Ratio@25 °C is 80%, the 1.5C CC Ratio@ 0°C is 49%, and the 1000^{th}-cycle capacity retention rate is 83%.

### Embodiment 7

Differences from Embodiment 1 are: The number of first tabs is 7, which is the same as the number of layers of the first electrode plate, and is 2×N (3.5 turns); and, in this embodiment, the charging manner is pulse charging, the forward voltage duty cycle is 90%, the reverse voltage duty cycle is 10%, and the frequency is 100 Hz. Other settings are the same as those in Embodiment 1, and are omitted here.

In this embodiment, the 3C CC Ratio@25 °C is 80.5%, the 1.5C CC Ratio@ 0°C is 60%, and the 1000^{th}-cycle capacity retention rate is 87%.

### Embodiment 8

Differences from Embodiment 1 are: The number of first tabs is 7, which is the same as the number of layers of the first electrode plate, and is 2×N (3.5 turns); and, in this embodiment, the charging manner is pulse charging, the forward voltage duty cycle is 80%, the reverse voltage duty cycle is 20%, and the frequency is 100 Hz. Other settings are the same as those in Embodiment 1, and are omitted here.

In this embodiment, the 3C CC Ratio@25 °C is 87%, the 1.5C CC Ratio@ 0°C is 62%, and the 1000^{th}-cycle capacity retention rate is 88%.

### Embodiment 9

Differences from Embodiment 1 are: The number of first tabs is 7, which is the same as the number of layers of the first electrode plate, and is 2×N (3.5 turns); and, in this embodiment, the charging manner is pulse charging, the forward voltage duty cycle is 70%, the reverse voltage duty cycle is 30%, and the frequency is 100 Hz. Other settings are the same as those in Embodiment 1, and are omitted here.

In this embodiment, the 3C CC Ratio@25 °C is 86%, the 1.5C CC Ratio@ 0°C is 64%, and the 1000^{th}-cycle capacity retention rate is 89%.

### Embodiment 10

Differences from Embodiment 1 are: The number of first tabs is 7, which is the same as the number of layers of the first electrode plate, and is 2×N (3.5 turns); and, in this embodiment, the charging manner is pulse charging, the forward voltage duty cycle is 60%, the reverse voltage duty cycle is 40%, and the frequency is 100 Hz. Other settings are the same as those in Embodiment 1, and are omitted here.

In this embodiment, the 3C CC Ratio@25 °C is 86.5%, the 1.5C CC Ratio@ 0°C is 65%, and the 1000^{th}-cycle capacity retention rate is 89.2%.

### Embodiment 11

Differences from Embodiment 1 are: The number of first tabs is 7, which is the same as the number of layers of the first electrode plate, and is 2×N (3.5 turns); and, in this embodiment, the charging manner is pulse charging, the forward voltage duty cycle is 90%, the reverse voltage duty cycle is 10%, and the frequency is 200 Hz. Other settings are the same as those in Embodiment 1, and are omitted here.

In this embodiment, the 3C CC Ratio@25 °C is 86.7%, the 1.5C CC Ratio@ 0°C is 66%, and the 1000^{th}-cycle capacity retention rate is 90.1%.

### Embodiment 12

Differences from Embodiment 1 are: The number of first tabs is 7, which is the same as the number of layers of the first electrode plate, and is 2×N (3.5 turns); and, in this embodiment, the charging manner is pulse charging, the forward voltage duty cycle is 90%, the reverse voltage duty cycle is 10%, and the frequency is 500 Hz. Other settings are the same as those in Embodiment 1, and are omitted here.

In this embodiment, the 3C CC Ratio@25 °C is 87.7%, the 1.5C CC Ratio@ 0°C is 68%, and the 1000^{th}-cycle capacity retention rate is 90.1%.

### Embodiment 13

Differences from Embodiment 1 are: The number of first tabs is 7, which is the same as the number of layers of the first electrode plate, and is 2×N (3.5 turns); and, in this embodiment, the charging manner is pulse charging, the forward voltage duty cycle is 90%, the reverse voltage duty cycle is 10%, and the frequency is 1000 Hz. Other settings are the same as those in Embodiment 1, and are omitted here.

In this embodiment, the 3C CC Ratio@25 °C is 88.7%, the 1.5C CC Ratio@ 0°C is 69%, and the 1000^{th}-cycle capacity retention rate is 91.6%.

### Embodiment 14

Differences from Embodiment 1 are: The number of first tabs is 7, which is the same as the number of layers of the first electrode plate, and is 2×N (3.5 turns); the 7 first tabs are randomly distributed on the first electrode plate rather than disposed at equal intervals. Other settings are the same as those in Embodiment 1, and are omitted here.

In this embodiment, the 3C CC Ratio@25 °C is 73%, the 1.5C CC Ratio@ 0°C is 41.2%, and the 1000^{th}-cycle capacity retention rate is 81.3%.

### Embodiment 15

Differences from Embodiment 1 are: The number of first tabs is 7, which is the same as the number of layers of the first electrode plate, and is 2×N (3.5 turns); the 7 first tabs are randomly distributed on the first electrode plate rather than disposed at equal intervals; and, the second tab is not disposed at a middle position in the length direction of the second electrode plate. Other settings are the same as those in Embodiment 1, and are omitted here.

In this embodiment, the 3C CC Ratio@25 °C is 72%, the 1.5C CC Ratio@ 0°C is 40.6%, and the 1000^{th}-cycle capacity retention rate is 81.3%.

### Comparative Embodiment 1

Differences from Embodiment 1 are: After the first electrode plate (negative electrode plate) is coated, a slot is made on the surface by laser cleaning, and 1 first tab (negative tab) is welded at a middle position in the length direction of the first electrode plate; after the second electrode plate (positive electrode plate) is coated, a slot is made on the surface by laser cleaning, and 1 second tab (positive tab) is welded at the middle position in the length direction of the second electrode plate. Other settings are the same as those in Embodiment 1, and are omitted here.

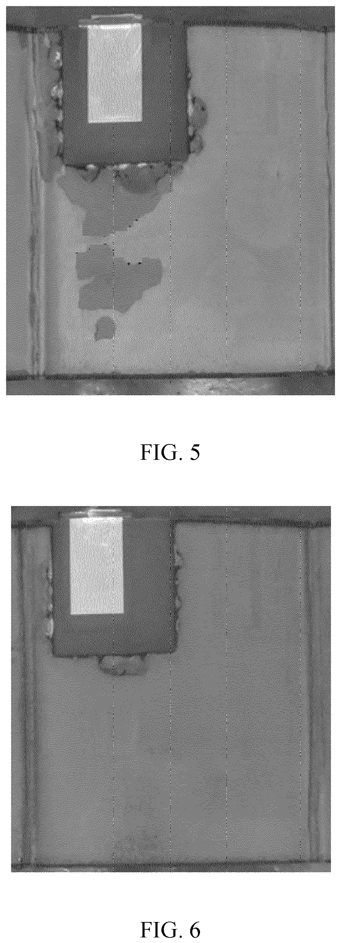

Due to the problem of uneven thinning at the edge of the negative tab, a cell balance (CB, a ratio between the capacity per unit area of the negative electrode and the capacity per unit area of the positive electrode) is insufficient at local positions. In addition, the current at the edge of the tab is relatively high due to the current output at the edge of the tab. Therefore, as shown in FIG. 5, the electrochemical device of this structure incurs severe lithium plating at the edge of the tab during charging, and is very prone to cause safety hazards.

In Comparative Embodiment 1, the 3C CC Ratio@25 °C is 71%, the 1.5C CC Ratio@ 0°C is 41%, and the 1000^{th}-cycle capacity retention rate is 78%.

### Comparative Embodiment 2

Differences from Embodiment 1 are: During the coating of the first electrode plate (negative electrode plate), polycaprolactone (PCL) tape (hot melt adhesive) is affixed to the corresponding position. During the coating, because this part is adhesive tape, the negative slurry does not stick to the surface. In this way, a slot is reserved for welding 1 first tab (negative tab) at a middle position in the length direction. The hot melt adhesive is less adhesive when heated during the drying of the electrode plate, and is thereby torn off. During the coating of the second electrode plate (positive electrode plate), the PCL tape is affixed to the corresponding position. During the coating, because this part is adhesive tape, the positive slurry does not stick to the surface. In this way, a slot is reserved for welding 1 second tab (positive tab) at a middle position. The hot melt adhesive is less adhesive when heated during the drying of the electrode plate, and is thereby torn off. Other settings are the same as those in Embodiment 1, and are omitted here.

Although this process alleviates the problem of uneven thinning near the tabs to some extent, there is still a risk of CB deficiency at local positions. Obvious lithium plating tends to occur near the tabs during charging, as shown in FIG. 6. In addition, a process of tearing off the tape occurs after the electrode plate is dried, thereby inevitably leading to an increase in energy consumption and reducing efficiency.

In Comparative Embodiment 2, the 3C CC Ratio@25 °C is 65%, the 1.5C CC Ratio@ 0°C is 41%, and the 1000^{th}-cycle capacity retention rate is 74%.

### Comparative Embodiment 3

Differences from Embodiment 1 are: During the coating of the first electrode plate (negative electrode plate), polycaprolactone (PCL) tape (hot melt adhesive) is affixed to the corresponding position. During the coating, because this part is adhesive tape, the negative slurry does not stick to the surface. In this way, a slot is reserved for welding 1 first tab (negative tab) at a middle position in the length direction. The hot melt adhesive is less adhesive when heated during the drying of the electrode plate, and is thereby torn off. During the coating of the second electrode plate (positive electrode plate), the PCL tape is affixed to the corresponding position. During the coating, because this part is adhesive tape, the positive slurry does not stick to the surface. In this way, a slot is reserved for welding 1 second tab (positive tab) at a middle position. The hot melt adhesive is less adhesive when heated during the drying of the electrode plate, and is thereby torn off. In addition, the charging manner is pulse charging, the forward voltage duty cycle is 90%, the reverse voltage duty cycle is 10%, and the frequency is 100 Hz. Other settings are the same as those in Embodiment 1, and are omitted here.

In Comparative Embodiment 3, the 3C CC Ratio@25 °C is 68%, the 1.5C CC Ratio@ 0°C is 42%, and the 1000^{th}-cycle capacity retention rate is 76%.

Table 1 shows the parameter settings and test results of the embodiments and comparative embodiments.

**Table 1**

| | Number of first tabs | Position of first tab | Number of second tabs | Position of second tab | Pulse charging | | | 3C CC Ratio @25 °C | 1.5C CC Ratio @0 °C | 1000^{th}-cycle capacity retention rate |
|---|---|---|---|---|---|---|---|---|---|---|
| | | | | | Forward voltage duty cycle | Reverse voltage duty cycle | Frequency (Hz) | | | |
| Embodiment 1 | 5 | Disposed at equal intervals | 1 | Middle | - | - | - | 76% | 40% | 80.2% |
| Embodiment 2 | 7 | Disposed at equal intervals | 1 | Middle | - | - | - | 80% | 45% | 81.6% |
| Embodiment 3 | 14 | Disposed at equal intervals | 1 | Middle | - | - | - | 81% | 50% | 83% |
| Embodiment 4 | 5 | Disposed at equal intervals | 2 | Disposed at equal intervals | - | - | - | 78% | 42% | 80.1% |
| Embodiment 5 | 5 | Disposed at equal intervals | 3 | Disposed at equal intervals | - | - | - | 79% | 47% | 82.1% |
| Embodiment 6 | 5 | Disposed at equal intervals | 4 | Disposed at equal intervals | - | - | - | 80% | 49% | 83% |
| Embodiment 7 | 7 | Disposed at equal intervals | 1 | Middle | 90% | 10% | 100 | 80.5% | 60% | 87% |
| Embodiment 8 | 7 | Disposed at equal intervals | 1 | Middle | 80% | 20% | 100 | 87% | 62% | 88% |
| Embodiment 9 | 7 | Disposed at equal intervals | 1 | Middle | 70% | 30% | 100 | 86% | 64% | 89% |
| Embodiment 10 | 7 | Disposed at equal intervals | 1 | Middle | 60% | 40% | 100 | 86.5% | 65% | 89.2% |
| Embodiment 11 | 7 | Disposed at equal intervals | 1 | Middle | 90% | 10% | 200 | 86.7% | 66% | 90.1% |
| Embodiment 12 | 7 | Disposed at equal intervals | 1 | Middle | 90% | 10% | 500 | 87.7% | 68% | 90.1% |
| Embodiment 13 | 7 | Disposed at equal intervals | 1 | Middle | 90% | 10% | 1000 | 88.7% | 69% | 91.6% |
| Embodiment 14 | 7 | Not disposed at equal intervals | 1 | Middle | - | - | - | 73% | 41.2% | 81.3% |
| Embodiment 15 | 7 | Not disposed at equal intervals | 1 | Not middle | - | - | - | 72% | 40.6% | 81.3% |
| Comparative Embodiment 1 | 1 | Middle | 1 | Middle | - | - | - | 71% | 41% | 78% |
| Comparative Embodiment 2 | 1 | Middle | 1 | Middle | - | - | - | 65% | 41% | 74% |
| Comparative Embodiment 3 | 1 | Middle | 1 | Middle | 90% | 10% | 100 | 68% | 42% | 76% |

As can be seen from Embodiments 1 to 3, in the range of (5 to 4)×N, the increased number of first tabs (negative tabs) helps to increase the CC ratio and capacity retention rate of the electrochemical device. As can be seen from Embodiment 1 and Embodiments 4 to 6, in the range of (1 to 2)×N, the increased number of second tabs (positive tabs) helps to increase the CC ratio and capacity retention rate of the electrochemical device. As can be seen from Embodiment 2 and Embodiments 7 to 13, the pulse charging manner helps to increase the CC ratio and capacity retention rate of the electrochemical device. In the pulse charging, the forward voltage duty cycle of the impulse current is 60% to 90%, the reverse voltage duty cycle is 10% to 40%, and the frequency range is 100 Hz to 1000 Hz. As can be seen from Embodiment 2 and Embodiments 14 to 15, when the first tabs and second tabs are disposed at equal intervals, the CC ratio and capacity retention rate of the electrochemical device in Embodiment 2 are a little higher than those in Embodiments 14 to 15. As can be seen from Embodiments 1 to 15 and Comparative Embodiments 1 to 3, in contrast to the laser cleaning of the slot or sticking of the PCL tape, the tabs disposed in an integrally forming manner (including but not limited to laser die-cutting) can increase the CC ratio and capacity retention rate of the electrochemical device. In contrast to the Middle Middle Tab structure, the arrangement of the number and position of the first tabs and second tabs according to this application can increase the CC ratio and capacity retention rate of the electrochemical device.

In the electrochemical device, the electrical device containing the electrochemical device, and the charging device connected to the electrochemical device and configured to charge the electrochemical device according to this application, by integrally forming the first tab on the first current collector, the electrochemical device avoids the loss of active materials on the first electrode plate caused by factors such as slot cleaning or PCL adhesive bonding, and avoids a series of problems caused by uneven thinning, thereby keeping the capacity and energy density of the electrochemical device from losing. In addition, the second tab is a single tab located in the middle or includes just a few tabs in the middle, so as to reduce the thinned region. Compared with a multi-tab winding structure, the electrochemical device hereof can keep the capacity and energy density from losing. Moreover, coupled with a pulse charging manner, the structure disclosed herein significantly improves the charging capabilities of the electrochemical device under low-temperature conditions.

## Claims

1. An electrochemical device, comprising an electrode assembly and a charging circuit configured to receive a charge current and charge the electrochemical device; the electrode assembly comprises a first electrode plate (10), a second electrode plate (50), and a separator (30) disposed between the first electrode plate (10) and the second electrode plate (50);
the first electrode plate (10) comprises a first current collector (101), a first active material layer (103) disposed on a surface of the first current collector (101), and X first tabs (105), wherein X is an integer greater than 1, and the X first tab (105)s and the first current collector (101) are integrally formed;
the second electrode plate (50) comprises a second current collector (501), a second active material layer (502) disposed on a surface of the second current collector (501), and Y second tabs (503) electrically connected to the second current collector (501), wherein Y is an integer greater than or equal to 1, and Y < X;
the first electrode plate (10) is a negative electrode plate; the second electrode (50) plate is a positive electrode plate; the second active material layer contains a first groove (504); and the second tab (503) is disposed in the first groove.

2. The electrochemical device according to claim 1, wherein the electrode assembly is formed by winding the first electrode plate (10), the separator (30), and the second electrode plate (50) for N turns, wherein 1 < N, X ≤ 4 × N, and Y ≤ 2 × N.

3. The electrochemical device according to claim 1, wherein
the charge current is an impulse current,
a forward voltage duty cycle of the impulse current is 60% to 90%, a reverse voltage duty cycle of the impulse current is 10% to 40%, and a frequency range of the impulse current is 100 Hz to 1000 Hz; or the forward voltage duty cycle of the impulse current is 80% to 90%, the reverse voltage duty cycle of the impulse current is 10% to 20%, and the frequency range of the impulse current is 500 Hz to 1000 Hz.

4. The electrochemical device according to claim 1, wherein the charging current is a staged charge current, the staged charge current comprises a first-stage constant current and a second-stage constant-voltage current; in a first stage, the charging circuit receives the first-stage constant current, and charges the electrochemical device until a preset voltage, and a capacity of the electrochemical device in the first stage is a first capacity; in a second stage, the charging circuit receives the second-stage constant-voltage current, and charges the electrochemical device until a preset current, and a capacity of the electrochemical device in the second stage is a second capacity;
a current rate of the first-stage constant current is 2.5 C to 3.5 C, and the first capacity is 72% to 88.7% of the second capacity; or the current rate of the first-stage constant current is 1 C to 2 C, and the first capacity is 40% to 69% of the second capacity.

5. The electrochemical device according to claim 1, wherein, along a length direction of the first electrode plate (10), the X first tabs (105) are disposed at equal intervals.

6. The electrochemical device according to claim 1, wherein the electrochemical device comprises a plurality of second tabs (503), and, along a length direction of the second electrode plate (50), the plurality of second tab (503)s are disposed at equal intervals.

7. The electrochemical device according to claim 1, wherein Y is 1 and, along a length direction of the second electrode plate (50), the second tab (503) is disposed at a middle position of the second electrode plate (50).

8. An electrical device, wherein the electrical device comprises the electrochemical device according to any one of claims 1 to 7.

9. A charging device, wherein the charging device is connected to the electrochemical device according to any one of claims 1 to 7, and is configured to charge the electrochemical device.

## Patentansprüche

1. Elektrochemische Vorrichtung, umfassend eine Elektrodenanordnung und einen Ladekreis, der konfiguriert ist, um einen Ladestrom zu empfangen und die elektrochemische Vorrichtung aufzuladen; die Elektrodenanordnung umfasst eine erste Elektrodenplatte (10), eine zweite Elektrodenplatte (50) und einen Separator (30), der zwischen der ersten Elektrodenplatte (10) und der zweiten Elektrodenplatte (50) angeordnet ist;
die erste Elektrodenplatte (10) umfasst einen ersten Stromkollektor (101), eine erste aktive Materialschicht (103), die auf einer Oberfläche des ersten Stromkollektors (101) angeordnet ist, und X erste Laschen (105), wobei X eine ganze Zahl größer als 1 ist, und die X ersten Laschen (105) und der erste Stromkollektor (101) integral ausgebildet sind;
die zweite Elektrodenplatte (50) umfasst einen zweiten Stromkollektor (501), eine zweite aktive Materialschicht (502), die auf einer Oberfläche des zweiten Stromkollektors (501) angeordnet ist, und Y zweite Laschen (503), die elektrisch mit dem zweiten Stromkollektor (501) verbunden sind, wobei Y eine ganze Zahl größer oder gleich 1 ist und Y < X gilt;
die erste Elektrodenplatte (10) ist eine Negativelektrodenplatte; die zweite Elektrodenplatte (50) ist eine Positivelektrodenplatte; die zweite aktive Materialschicht enthält eine erste Nut (504); und die zweite Lasche (503) ist in der ersten Nut angeordnet.

2. Elektrochemische Vorrichtung nach Anspruch 1, wobei die Elektrodenanordnung durch Wickeln der ersten Elektrodenplatte (10), des Separators (30) und der zweiten Elektrodenplatte (50) für N Umdrehungen gebildet wird, wobei 1 < N, X ≤ 4 × N und Y ≤ 2 × N gilt.

3. Elektrochemische Vorrichtung nach Anspruch 1, wobei
der Ladestrom ein Impulsstrom ist,
ein Tastverhältnis der Vorwärtsspannung des Impulsstroms 60 % bis 90 %, ein Tastverhältnis der Rückwärtsspannung des Impulsstroms 10 % bis 40 % beträgt und ein Frequenzbereich des Impulsstroms 100 Hz bis 1000 Hz liegt; oder das Tastverhältnis der Vorwärtsspannung des Impulsstroms 80 % bis 90 %, das Tastverhältnis der Rückwärtsspannung des Impulsstroms 10 % bis 20 % beträgt und der Frequenzbereich des Impulsstroms 500 Hz bis 1000 Hz liegt.

4. Elektrochemische Vorrichtung nach Anspruch 1, wobei der Ladestrom ein gestufter Ladestrom ist, der gestufte Ladestrom einen First-Stage-Konstantstrom und einen Second-Stage-Konstantspannungsstrom umfasst; in einem First-Stage empfängt der Ladekreis den First-Stage-Konstantstrom und lädt die elektrochemische Vorrichtung bis zu einer vorgegebenen Spannung, und eine Kapazität der elektrochemischen Vorrichtung im First-Stage ist eine First-Capacity; in einem Second-Stage empfängt der Ladekreis den Second-Stage-Konstantspannungsstrom und lädt die elektrochemische Vorrichtung bis zu einem vorgegebenen Strom, und eine Kapazität der elektrochemischen Vorrichtung im Second-Stage ist eine Second-Capacity;
eine C-Rate des First-Stage-Konstantstroms beträgt 2,5 C bis 3,5 C, und die First-Capacity beträgt 72 % bis 88,7 % der Second-Capacity; oder die C-Rate des First-Stage-Konstantstroms beträgt 1 C bis 2 C, und die First-Capacity beträgt 40 % bis 69 % der Second-Capacity.

5. Elektrochemische Vorrichtung nach Anspruch 1, wobei, entlang einer Längsrichtung der ersten Elektrodenplatte (10), die X ersten Laschen (105) in gleichen Abständen angeordnet sind.

6. Elektrochemische Vorrichtung nach Anspruch 1, wobei die elektrochemische Vorrichtung eine Mehrzahl von zweiten Laschen (503) umfasst und, entlang einer Längsrichtung der zweiten Elektrodenplatte (50), die Mehrzahl von zweiten Laschen (503) in gleichen Abständen angeordnet sind.

7. Elektrochemische Vorrichtung nach Anspruch 1, wobei Y 1 ist und, entlang einer Längsrichtung der zweiten Elektrodenplatte (50), die zweite Lasche (503) in einer mittleren Position der zweiten Elektrodenplatte (50) angeordnet ist.

8. Elektrische Vorrichtung, wobei die elektrische Vorrichtung die elektrochemische Vorrichtung nach einem der Ansprüche 1 bis 7 umfasst.

9. Ladevorrichtung, wobei die Ladevorrichtung mit der elektrochemischen Vorrichtung nach einem der Ansprüche 1 bis 7 verbunden ist und konfiguriert ist, um die elektrochemische Vorrichtung aufzuladen

## Revendications

1. Dispositif électrochimique, comprenant un assemblage d'électrodes et un circuit de charge configuré pour recevoir un courant de charge et charger le dispositif électrochimique ; l'assemblage d'électrodes comprend une première plaque d'électrode (10), une seconde plaque d'électrode (50) et un séparateur (30) disposé entre la première plaque d'électrode (10) et la seconde plaque d'électrode (50) ;
la première plaque d'électrode (10) comprend un premier collecteur de courant (101), une première couche de matériau actif (103) disposée sur une surface du premier collecteur de courant (101), et X premières pattes (105), où X est un entier supérieur à 1, et les X premières pattes (105) et le premier collecteur de courant (101) sont formés intégralement ;
la seconde plaque d'électrode (50) comprend un second collecteur de courant (501), une seconde couche de matériau actif (502) disposée sur une surface du second collecteur de courant (501), et Y secondes pattes (503) connectées électriquement au second collecteur de courant (501), où Y est un entier supérieur ou égal à 1, et Y < X ;
la première plaque d'électrode (10) est une plaque d'électrode négative ; la seconde plaque d'électrode (50) est une plaque d'électrode positive ; la seconde couche de matériau actif contient une première rainure (504) ; et la seconde patte (503) est disposée dans la première rainure.

2. Dispositif électrochimique selon la revendication 1, dans lequel l'assemblage d'électrodes est formé par l'enroulement de la première plaque d'électrode (10), du séparateur (30) et de la seconde plaque d'électrode (50) pendant N tours, où 1<N, X≤4 × N, et Y ≤ 2 × N.

3. Dispositif électrochimique selon la revendication 1, dans lequel
le courant de charge est un courant d'impulsion,
un cycle d'asservissement de tension avant du courant d'impulsion est de 60 % à 90 %, un cycle d'asservissement de tension arrière du courant d'impulsion est de 10 % à 40 %, et une plage de fréquence du courant d'impulsion est de 100 Hz à 1000 Hz ; ou le cycle d'asservissement de tension avant du courant d'impulsion est de 80 % à 90 %, le cycle d'asservissement de tension arrière du courant d'impulsion est de 10 % à 20 %, et la plage de fréquence du courant d'impulsion est de 500 Hz à 1000 Hz.

4. Dispositif électrochimique selon la revendication 1, dans lequel le courant de charge est un courant de charge échelonné, le courant de charge échelonné comprend un premier courant constant et un second courant constant-tension ; dans une première étape, le circuit de charge reçoit le premier courant constant, et charge le dispositif électrochimique jusqu'à une tension préréglée, et une capacité du dispositif électrochimique dans la première étape est une première capacité ; dans une seconde étape, le circuit de charge reçoit le second courant constant-tension, et charge le dispositif électrochimique jusqu'à un courant préréglé, et une capacité du dispositif électrochimique dans la seconde étape est une seconde capacité ;
un taux de courant du premier courant constant est de 2,5 C à 3,5 C, et la première capacité est de 72 % à 88,7 % de la seconde capacité ; ou le taux de courant du premier courant constant est de 1 C à 2 C, et la première capacité est de 40 % à 69 % de la seconde capacité.

5. Dispositif électrochimique selon la revendication 1, dans lequel le long d'une direction de longueur de la première plaque d'électrode (10), les X premières pattes (105) sont disposées à intervalles égaux.

6. Dispositif électrochimique selon la revendication 1, dans lequel le dispositif électrochimique comprend une pluralité de secondes pattes (503), et, le long d'une direction de longueur de la seconde plaque d'électrode (50), la pluralité de secondes pattes (503) sont disposées à intervalles égaux.

7. Dispositif électrochimique selon la revendication 1, dans lequel Y est égal à 1, et, le long d'une direction de longueur de la seconde plaque d'électrode (50), la seconde patte (503) est disposée à une position centrale de la seconde plaque d'électrode (50).

8. Dispositif électrique, dans lequel le dispositif électrique comprend le dispositif électrochimique selon l'une quelconque des revendications 1 à 7.

9. Dispositif de charge, dans lequel le dispositif de charge est connecté au dispositif électrochimique selon l'une quelconque des revendications 1 à 7, et est configuré pour charger le dispositif électrochimique.
